# EUROPÄISCHE PATENTSCHRIFT

(11) **EP 1 573 134 B1**
(45) Veröffentlichungstag und Bekanntmachung des Hinweises auf die Patenterteilung: **21.02.2007**
(21) Anmeldenummer: 03813872.3
(22) Anmeldetag: 07.08.2003
(51) Int. Cl.: E01C 19/00

(54) **SELBSTFAHRENDES FAHRZEUG, INSBESONDERE STRASSENBAUMASCHINE, SOWIE VERFAHREN ZUM FAHREN UND LENKEN EINES FAHRZEUGES MIT EINEM DREHBAREN FAHRERSITZ**
SELF-PROPELLED VEHICLE, IN PARTICULAR A ROAD-BUILDING MACHINE AND A METHOD FOR DRIVING AND CONTROLLING A VEHICLE WITH THE AID OF A ROTATABLE DRIVER SEAT
VEHICULE AUTOMOTEUR, EN PARTICULIER ENGIN ROUTIER, ET PROCEDE POUR CONDUIRE ET DIRIGER UN VEHICULE A L'AIDE D'UN SIEGE DE CONDUCTEUR TOURNANT

(30) Priorität: 20.12.2002 DE 10260902
(43) Veröffentlichungstag der Anmeldung: 14.09.2005
(73) Patentinhaber: Hamm AG, 95643 Tirschenreuth (DE)
(72) Erfinder: ACKERMANN, Hans-Peter, 95643 Tirschenreuth/Wondreb (DE)
(74) Vertreter: Dallmeyer, Georg
(86) Internationale Anmeldenummer: PCT/EP2003/008735
(87) Internationale Veröffentlichungsnummer: WO 2004/059088

(56) Entgegenhaltungen:
- EP-A- 0 935 023
- EP-A- 0 935 025
- WO-A-93/20791
- PATENT ABSTRACTS OF JAPAN Bd. 2000, Nr. 12, 3. Januar 2001 (2001-01-03) -& JP 2000 250649 A (AISIN SEIKI CO LTD), 14. September 2000 (2000-09-14)

## Beschreibung

Die Erfindung betrifft ein selbstfahrendes Fahrzeug nach dem Oberbegriff des Anspruchs 1 und ein Verfahren nach dem Oberbegriff des Anspruchs 9.

Derartige Fahrzeuge, die einen drehbaren Fahrersitz aufweisen, sind beispielsweise bei Straßenbaumaschinen und dort insbesondere bei Straßenwalzen bekannt.

Bei einer Straßenwalze besteht die Anforderung, einen frei um seine vertikale Achse drehbaren Fahrersitz zu entwickeln, da aufgrund der Einsätzverhältnisse der Walzen eine ständige Änderung der Sitzposition des Bedieners im Verhältnis zur Fahrtrichtung der Straßenwalze erforderlich ist. Eine Voraussetzung für die kosten- und funktionsbezogene Umsetzbarkeit ist, dass sich die Bedienelemente mit dem Fahrersitz drehen. Andernfalls müssten kostenträchtig mehrere redundante Bedienelemente verwendet werden. Typischerweise arbeitet z.B. eine Asphaltwalze hinter einem Fertiger, der das Material einbaut und vorverdichtet. Die Walze überfährt die vom Fertiger eingebauten Flächen mehrmals, um die Endverdichtung und die Ebenheit der Fläche herzustellen. Dabei wird häufig die Fahrrichtung gewechselt - der Anteil der Vorwärts- und Rückwärtsfahrten ist in der Regel annähernd gleich. Um die Sichtverhältnisse auf das Arbeitsfeld, die Sicherheit und die Ergonomie der Maschinenbedienung zu gewährleisten bzw. zu verbessern, ist ein Drehen des Fahrersitzes um 180° mit jedem Fahrtrichtungswechsel erforderlich. Dabei darf die Walze nur für den kurzen Zeitpunkt des Fahrtrichtungswechsels auf dem heißen Asphalt stillstehen. Das Drehen des Fahrersitzes sollte aus diesem Grund und aus Zeitgründen während der Fahrt erfolgen. Für jeweils kurze Wegstrecken mit unterschiedlicher Fahrtrichtung ist die Sitzposition um 90° zur Fahrtrichtung gedreht sinnvoll. Je nach Streckenverlauf sind auch Sitzpositionen zwischen 0 und 90° zur Fahrtrichtung gedreht ergonomisch sinnvoll.

Um die Maschinen sicher zu bedienen, muss für die wesentlichen Bedienelemente wie Fahrtrichtungsgeber (Lenkrad, Joystick) und Fahrhebel zur Wahl der Fahrtrichtung und der Geschwindigkeit für den Bediener eine eindeutige Zuordnung zur Fahrtrichtung gegeben sein. Bestehende Systeme lösen dieses Problem nicht. Folglich ist das oben beschriebene - anwendungstechnisch sinnvolle - freie Drehen des Fahrersitzes einschließlich der Bedienelemente während der Fahrt der Walze bisher nicht möglich.

In der EP 0935025 wird ein System mit einem drehbaren Fahrersitz beschrieben, bei dem der Fahrantrieb in Abhängigkeit von der Drehposition des Fahrersitzes derart gesteuert wird, dass beim Verschwenken des Fahrersitzes in einen voreingestellten Bereich die Steuerungsvorrichtung den Richtungssinn der Antriebsvorgaben umkehrt. Diese Umsteuerung kann aber nur bei stillstehender Walze erfolgen. Bei fahrender Walze würde das Drehen des Fahrersitzes beispielsweise zu einer Fahrtrichtungsumkehr der Walze führen, die vom Fahrer unter Umständen nicht beabsichtigt ist.

Aus der EP 0935023 A2 ist ein Verfahren für eine Walze mit zwei lenkbaren Bandagen bekannt, das über eine Steuereinrichtung verfügt, die den Lenkantrieb beider Bandagen derart steuert, dass die jeweils in Fahrtrichtung vorderer Bandage automatisch als aktive Bandage durch die Lenkvorgaben angesteuert wird. Auch mit diesem Verfahren wird nicht das Problem des Richtungssinns der Bedienelemente bei sich während der Fahrt ändernden Sitzpositionen gelöst.

Der Erfindung liegt die Aufgabe zugrunde, ein selbstfahrendes Fahrzeug mit einem drehbaren Fahrersitz der eingangs genannten Art, sowie ein Verfahren zum Fahren und Lenken eines Fahrzeuges mit einem drehbaren Fahrersitz, derart zu verbessern, dass die Zuordnung der Bewegungsrichtung der Bedienungselemente zur Bewegungsrichtung des Fahrzeuges in jeder Drehwinkelstellung des Fahrersitzes erhalten bleibt.

Zur Lösung dieser Aufgabe dienen die Merkmale des Anspruchs 1 bzw. 9.

Die Erfindung sieht in vorteilhafter Weise vor, dass bei einer Bedieneinheit für den Fahrbetrieb, die Stellsignale für den Fahrantrieb und die Lenkungseinrichtung in Abhängigkeit von der Stellbewegungsrichtung von Bedienelementen der Bedieneinheit erzeugt, eine Einrichtung den momentanen Drehwinkel µ zwischen der position des Fahrersitzes und der Längsachse des Fahrgestells erfasst und die Richtung der Stellsignale der Bedienungselemente um einen Winkel -µ korrigiert, derart, dass die Stellbewegungsrichtung der Bedienungselemente in jeder Sitzdrehposition mit der Bewegungsrichtung des Fahrzeuges übereinstimmt.

Die Erfindung ermöglicht es in vorteilhafter Weise, dass die Bedienelemente der Bedieneinheit stets eine Stellbewegungsrichtung beibehält, die der Bewegungsrichtung der Maschine entspricht, auch wenn der Fahrersitz während des Fahrbetriebes gedreht wird. Der Fahrersitz ist also während der Fahrt frei drehbar, ohne dass eine Unterbrechung des Fahrbetriebes erforderlich ist.

Die Einrichtung zum Erfassen des momentanen Drehwinkels der Sitzdrehposition überträgt den Drehwinkel mechanisch, elektromechanisch, optisch oder elektrisch auf die Bedieneinheit.

Die Übertragung des Drehwinkels auf die Elemente ermöglicht es, die von dem Bedienelementen der Bedieneinheit erzeugten Stellsignale, um einen dem Drehwinkel des Fahrersitzes entsprechenden Wert zu korrigieren, so dass eine Änderung der Sitzdrehposition keinen Einfluss auf die Stellbewegungsrichtung ausübt.

Die Stellbewegungsrichtung der Bedienelemente ist daher stets gleich und entspricht der Bewegungsrichtung des Fahrzeuges.

In der Bedieneinheit werden die Stellsignale für die Fahrtrichtungswahl und die Lenkung in Abhängigkeit von dem Drehwinkel der momentanen Sitzdrehposition kontinuierlich korrigiert. Die kontinuierliche Korrektur der Richtung der Stellsignale ermöglicht das freie beliebige Drehen des Fahrersitzes während der Fahrt.

Die Bedieneinheit weist einen einzigen Bedienhebel für die Fahrtrichtungswahl, die Fahrgeschwindigkeit und die Lenkung auf.

Der Bedienhebel ist von einem Kreuzgelenk gelagert, wobei das Kreuzgelenk auf einem Drehkranz, der um einen Winkel -µ verdrehbar ist, wenn der Fahrersitz eine Sitzdrehposition mit einem Drehwinkel µ einnimmt.

Die Übertragung des Drehwinkels an die Bedieneinheit kann beispielsweise mittels einer flexiblen Übertragungswelle, einem elektromotorischen Antrieb oder einem Torsionsstab erfolgen.

Das Gehäuse der Bedieneinheit ist vorzugsweise ortsfest mit dem Fahrersitz verbunden.

Das Fahrzeug kann zwei lenkbare Achsen aufweisen, wobei die Lenkungssteuerung den Bedienhebel auf eine der beiden Achsen oder auf beide Achsen umschalten kann.

Der Bedienhebel ist vorzugsweise in zwei zueinander orthogonalen Kulissen geführt.

Das Fahrzeug besteht aus einer Straßenbaumaschine, vorzugsweise einer Straßenwalze.

Im folgenden werden unter Bezugnahme auf die Zeichnungen ein Ausführungsbeispiel der Erfindung näher erläutert.

Es zeigen:
- Fig. 1: eine Straßenwalze mit einem drehbaren Fahrersitz nach dem Stand der Technik,
- Fig. 2: eine Darstellung gemäß Fig. 1 mit entgegengesetzter Fahrtrichtung,
- Fig. 3: die Stellrichtung des Bedienhebels nach der Erfindung,
- Fig. 4: den erfindungsgemäßen Bedienhebel der Bedieneinheit, und
- Fig. 5 und 6: unterschiedliche Sitzdrehpositionen des Fahrersitzes.

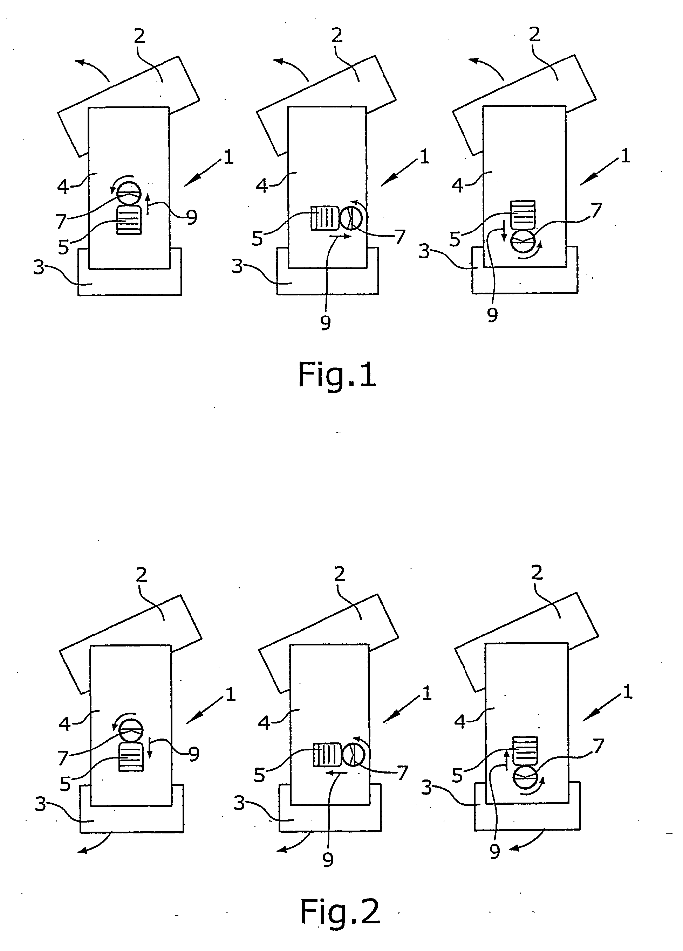

In den Fign. 1 bis 3 ist schematisch eine Straßenwalze 1 mit zwei Walzenbandagen 2,3 dargestellt, von denen mindestens eine lenkbar ist. Die Walzenbandagen sind über ein Fahrgestell 4 miteinander verbunden, auf dem ein Fahrerstand für eine Bedienungsperson angeordnet ist.

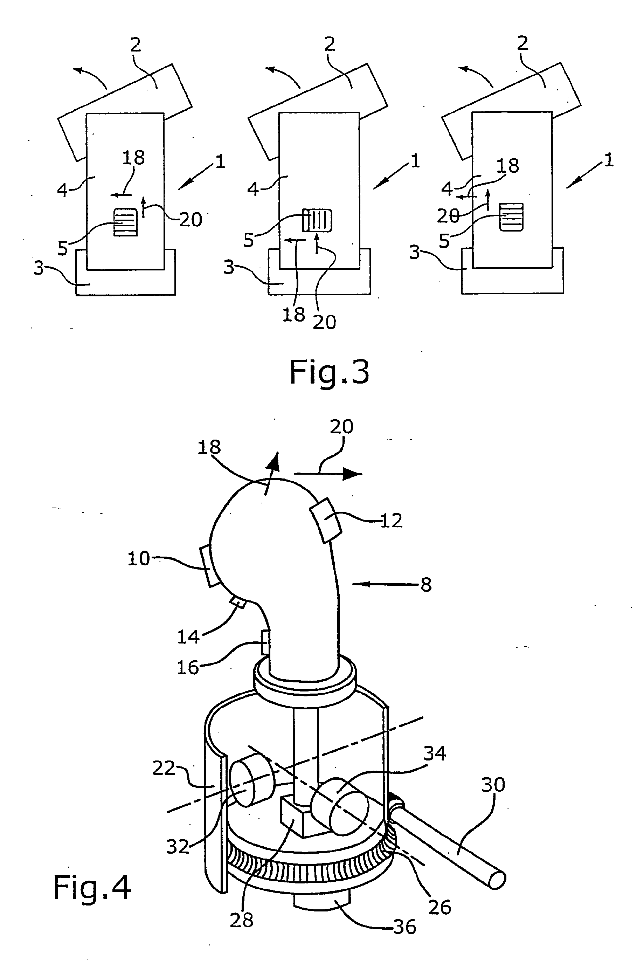

In dem Fahrerstand ist ein drehbarer Fahrersitz 5 mit integrierter Bedieneinheit 6 für den Fahrbetrieb angeordnet. Die Bedieneinheit 6 weist vorzugsweise einen Bedienhebel 8 auf, dessen Funktionen im einzelnen in Verbindung mit Fig. 4 erläutert werden.

Fig. 1 zeigt eine Straßenwalze 1 mit mindestens einer lenkbaren Bandage 2. Gelenkt wird die in Fahrtrichtung vorderer Bandage 2. Im linken Bildteil ist die Sitzposition in Fahrtrichtung ausgerichtet. Hier führt die Drehung des Lenkrades 7 nach links zu einem Fahrtrichtungswechsel nach links, der Fahrhebel 9 ist in die Richtung der Fahrbewegung der Straßenwalze 1 ausgelenkt. Wird der Fahrersitz einschließlich der Bedieneinheit 6 um 90° nach links oder rechts gedreht (mittlerer Bildteil) ist bereits keine eindeutige Zuordnung der Stellbewegungsrichtung an den Bedienelementen der Bedieneinheit zur Fahrtrichtung möglich. Erfolgt eine Drehung der Sitzposition um 180° bei gleichbleibender Fahrtrichtung (rechter Bildteil), stimmt die Richtung der Stellbewegungen der Bedienelemente nicht mehr mit der Fahrtrichtung überein. Folglich kann die Maschine nicht sicher gehandhabt werden.

Fig. 2 zeigt den gleichen Sachverhalt mit geänderter Fahrtrichtung. Auch hier führt die Drehung des Federsitzes zu einem Verlust der Zuordnung von Fahrtrichtung der Straßenwalze zur jeweiligen Richtung der Stellbewegung an den Bedienelementen Fahrhebel 9 und Lenkrad 7.

Fig. 3 beschreibt die der Erfindung zugrundeliegende Lösung, welche den Fahrhebel 9 und vorzugsweise die Lenkfunktion in einen Bedienhebel integriert. Im dargestellten Fall wird der Bedienhebel 8 in Pfeilrichtung (20) ausgelenkt und bleibt in dieser Position - die Maschine fährt in Pfeilrichtung. Eine Bewegung des Bedienhebels 8 in Pfeilrichtung (18) führt zu einer Lenkbewegung der Bandage - die Maschine fährt nach links. Wird der Fahrersitz während der Fahrt um 90° gedreht, wird der Bedienhebel 8 derart nachgeführt, dass seine Auslenkungsrichtung weiterhin der Fahrtrichtung entspricht. Auch die Bewegungsrichtung am Bedienhebel 8 für die Lenkung entspricht der Bewegungsrichtung der Straßenwalze 1. Gleiches gilt für die Drehung des Fahrersitzes 5 um 180°. Der Fahrersitz 5 ist weiterhin über 180° hinaus frei drehbar.

Fig. 4 stellt die Bedieneinheit 6 mit ihren Bauteilen, den Bedienfunktionen und der Vorrichtung zur Übertragung der Drehbewegung des Fahrersitzes 5 auf die Bedieneinheit dar. Der Bedienhebel 8 besitzt Schalteinrichtungen 10 für die Funktionen Heben und Senken des Kantenandruckgerätes, Schalteinrichtung 12 für die Hinterradlenkung bzw. Hundegang, Schalteinrichtung 14 für das Ein- und Ausschalten der Vibration, Schalteinrichtung 16 für das Entriegeln der Fahrsperre, sowie Schalteinrichtung 18 mit zwei Freiheitsgrade für die Lenkrichtungsvorgabe und Schalteinrichtung 20 für die Fahrtrichtung. Um für die Bedienungsperson eine Unterscheidung zwischen Lenkbewegung und Fahrbewegung während der Bedienhebelauslenkung zu erleichtern, wird die Lenkbewegung gegen eine Federkraft zur Neutralstellung und die Fahrauslenkung gegen eine Reibkraft betätigt. Vorzugsweise sind die wesentlichen genannten Bedienfunktionen in einer Bedieneinheit 6 integriert. Das Gehäuse 22 ist fest mit dem Fahrersitz 5 verbunden. Eine Auslenkung des Bedienhebels 8 in Richtung Fahren oder Lenken führt zu einer Auslenkung der jeweiligen in der Zeichnung nicht dargestellt Kulisse für die Fahr- bzw. Lenkbewegung. Die Kulisse für die Fahrbewegung gleitet auf dem Schwenkrad 26 und wird auch durch dieses in seiner äußeren Lage begrenzt. Auf der Kulisse für die Fahrbewegung gleitet um 90° versetzt die Lenkbewegung. Im oberen Bereich wird der Bedienhebel 8 durch ein Kreuzgelenk 28 geführt. Die Drehbewegung des Fahrersitzes 5 um seine vertikale Achse wird in der dargestellten Ausführung über eine flexible Welle 30 als Übertragungswelle auf das Schwenkrad 26 übertragen. Die Übertragung der Drehbewegung kann auch elektromotorisch oder durch einen Torsionsstab erfolgen. Ein Verdrehen des Fahrersitzes 5 um einen Winkel µ führt zu einer Verdrehung des Schwenkrades 26 im Gehäuse 22 um einen Winkel -µ (Gleicher Betrag des Drehwinkels aber unterschiedliches Vorzeichen). Mit dem Schwenkrad 26 verdrehen sich die Kulissen für die Fahr- und Lenkbewegung. Dadurch wird die Zuordnung der Bewegungsrichtung des Bedienhebels 8 zur Fahrtrichtung der Straßenwalze 1 sichergestellt.

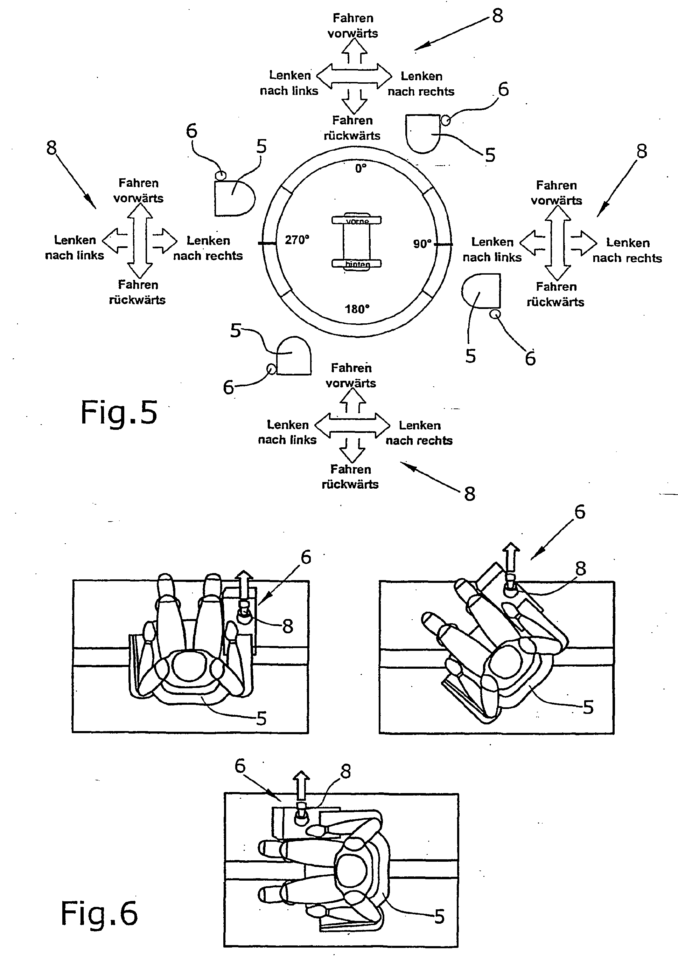

Die Auslenkung des Bedienhebels 8 für das Lenken und Fahren wird durch zwei Potentiometer 32 (x-Richtung) und 34 (y-Richtung) im Kreuzgelenk 28 (Drehpunkt des Bedienhebels 8) erfasst. Ein drittes Potentiometer 36 ist unterhalb des Schwenkrades 26 auf dessen Drehachse angebracht und misst den Drehwinkel des Schwenkrades 26 relativ zum Gehäuse 22 und somit die Sitzposition. Die Potentiometer 32 und 34 sind drehfest mit dem Gehäuse 22 verbunden, d.h. eine Drehung des Fahrersitzes 5 verändert die Zuordnung des jeweiligen Potentiometers 32 und 34 zur Fahrhebelauslenkung. Beispielsweise wird in der Ausgangssitzposition der Lenkausschlag des Bedienhebels 8 zu 100 % durch das Potentiometer 34 erfasst. Eine Drehung des Fahrersitzes 5 führt zu einer Lageänderung des Bedienhebels 8 relativ zu den Potentiometern - d.h. die Verdrehung des Kreuzgelenkes 28 in seinen beiden Drehachsen ändert sich. Der Lenkausschlag des Bedienhebels 8 wird dann entsprechend des Sitzdrehwinkels, der durch das Drehwinkelpotentiometer gemessen wird, zu Anteilen von beiden Potentiometern 32,34 in x- und y-Richtung erfasst. Da der Drehwinkel µ bekannt ist, kann das resultierende Signal berechnet werden. Den sich mit der Sitzdrehung verändernden Signalanteil der Potentiometer 32,34 in x- und y-Richtung und die Zuordnung des Bedienhebels 8 zur Sitzposition veranschaulicht Fig. 5 und Fig. 6.

Fig. 5 zeigt schematisch vier unterschiedliche um 90° versetzte Sitzpositionen des Sitzes 5 mit dazugehöriger Bedieneinheit 6. Zu der jeweiligen Sitzposition ist auch mit Richtungspfeilen erläutert, in welche Richtung der Bedienhebel 8 für die angegebenen Funktionen bewegt werden muss. Aus der Darstellung ist ersichtlich, dass die Betätigungsrichtung für den Bedienhebel 8 in allen Sitzpositionen erhalten bleibt.

Fig. 6 erläutert ebenfalls die Bewegungsrichtung des Bedienhebels 8, wobei der Pfeil für alle Sitzpositionen die Richtungsangabe für Vorwärtsfahrt darstellt.

## Patentansprüche

1. Selbstfahrende Straßenbaumaschine,
- mit einem auf einem Fahrgestell (4) angeordneten Fahrerstand,
- mit einem Fahrantrieb,
- mit einer Lenkungseinrichtung,
- mit einem drehbaren in dem Fahrerstand angeordneten Fahrersitz (5) mit integrierter Bedieneinheit (6) für den Fahrbetrieb, die Stellsignale für den Fahrantrieb und die Lenkungseinrichtung in Abhängigkeit von der Stellbewegungsrichtung von Bedienelementen der Bedieneinheit (6) erzeugt,
**dadurch gekennzeichnet, dass**
die Straßenbaumaschine eine Einrichtung zur Erfassung des momentanen Drehwinkels µ zwischen der Position des Fahrersitzes (5) und der Längsachse des Fahrgestells (4) und zur Korrektur der Richtungskomponenten der Stellsignale der Bedienelemente um einen Winkel -µ umfasst, derart, dass die Stellbewegungsrichtung der Bedienelemente in jeder Position des Fahrersitzes (5) mit der dadurch ausgelösten Bewegungsrichtung des Fahrzeugs übereinstimmt.

2. Straßenbaumaschine nach Anspruch 1, **dadurch gekennzeichnet, dass** die Einrichtung zum Erfassen des momentanen Drehwinkels µ zwischen der Position des Fahrersitzes (5) und der Längsachse des Fahrgestells (4) den Drehwinkel µ mechanisch, elektromechanisch, optisch oder elektrisch an die Bedienelemente der Bedieneinheit (6) überträgt.

3. Straßenbaumaschine nach Anspruch 1 oder 2, **dadurch gekennzeichnet, dass** in der Bedieneinheit (6) die Stellsignale für die Fahrtrichtung und die Lenkung in Abhängigkeit von dem momentanen Drehwinkel µ zwischen der Position des Fahrersitzes (5) und der Längsachse des Fahrgestells (4) kontinuierlich korrigierbar sind.

4. Straßenbaumaschine nach einem der Ansprüche 1 bis 3, **dadurch gekennzeichnet, dass** die Bedieneinheit (6) einen einzigen Bedienhebel (8) als Bedienelement für die Fahrtrichtungswahl, die Fahrgeschwindigkeit und die Lenkung aufweist.

5. Straßenbaumaschine nach Anspruch 4, **dadurch gekennzeichnet, dass** der Bedienhebel (8) in einem Kreuzgelenk (28) gelagert ist und dass das Kreuzgelenk (28) auf einem Schwenkrad (26) sitzt, der um einen Drehwinkel -µ verdrehbar ist, wenn die Position des Fahrersitzes (5) einen Drehwinkel µ zu der Längsachse des Fahrgestells einnimmt.

6. Straßenbaumaschine nach einem der Ansprüche 1 bis 5, **dadurch gekennzeichnet, dass** das Fahrzeug zwei lenkbare Achsen aufweist und dass an der Bedieneinheit (6) die Lenkungssteuerung auf eine der beiden Achsen oder auf beide Achsen umschaltbar ist.

7. Straßenbaumaschine nach Anspruch 4 bis 6, **dadurch gekennzeichnet, dass** der Bedienhebel (8) in zwei zueinander orthogonalen Kullssen (24) geführt ist.

8. Straßenbaumaschine nach einem der Ansprüche 1 bis 7, **dadurch gekennzeichnet, dass** die Straßenbaumaschine aus einer Straßenwalze (1) besteht.

9. Verfahren zum Fahren und Lenken einer Straßenbaumaschine, mit einem drehbaren in einem Fahrstand angeordneten Fahrersitz (5) und einer in den Fahrersitz (5) integrierten Bedieneinheit (6) für den Fahrbetrieb mit Bedienelementen,
**gekennzeichnet durch**,
- das Erfassen des momentanen Drehwinkels µ zwischen der Position des Fahrersitzes (5) und der Längsachse des Fahrgestells (4) und das kontinuierliche Korrigieren der Richtungskomponenten der Stellsignale der Bedienelemente um einen Winkel -µ,
- derart dass die Stellbewegungsrichtung der Bedienelemente in jeder Sitzdrehposition mit der Bewegungsrichtung des Fahrzeuges übereinstimmt.

## Claims

1. Self-propelled road-building machine comprising
- a driver's cab arranged on a chassis (4),
- a traction drive,
- a steering means,
- a rotatable driver's seat (5) provided in the driver's cab with an integrated control unit (6) for the driving operation, which generates actuation signals for the traction drive and the steering means in dependence on the direction of actuation of control elements of the control unit (6),
**characterized in that**
the road-building machine comprises means for detecting the instantaneous rotation angle µ between the position of the driver's seat (5) and the longitudinal axis of the chassis (4) and for correcting the direction components of the actuation signals of the control elements by an angle -µ, such that the direction of actuation of the control elements corresponds to the direction of movement of the vehicle in any rotational position of the driver's seat (5).

2. Device of claim 1, wherein the means for detecting the instantaneous rotation angle µ between the position of the driver's seat (5) and the longitudinal axis of the chassis (4) transmits the rotation angle µ mechanically, electromechanically, optically or electrically to the control elements of the control unit (6).

3. Device of claim 1 or 2, wherein, in the control unit (6), the actuation signals for the travelling direction and the steering may be continuously corrected in dependence on the instantaneous rotation angle µ between the position of the driver's seat (5) and the longitudinal axis of the chassis (4).

4. Device of one of claims 1 to 3, wherein the control unit (6) comprises a single control lever (8) as the control element for the selection of the travelling direction, the travelling speed and the steering.

5. Device of claim 4, wherein the control lever (8) is supported in a universal joint (28) and the universal joint (28) rests on a turnover (26) rotatable about a rotation angle -µ when the rotational position of the driver's seat (5) assumes a rotation angle µ to the longitudinal axis of the chassis.

6. Device of one of claims 1 to 5, wherein the vehicle has two steerable axes and wherein, at the control unit (6), the steering control may be switched to one of both axes or to both axes.

7. Device of claims 4 to 6, wherein the control lever (8) is guided in two mutually orthogonal slotted links (24).

8. Device of one of claims 1 to 7, wherein the road-building vehicle is a road roller (1).

9. Method for driving and steering a vehicle, in particular a road-building machine, with a rotatable driver's seat (5) provided in a driver's cab and a control unit (6) for the driving operation which is integrated in the driver's seat (5) and comprises control elements,
**characterized by**
- the detection of the instantaneous rotation angle µ between the position of the driver's seat (5) and the longitudinal axis of the chassis (4) and the continuous correction of the directional components of the actuation signals of the control elements by an angle -µ,
- such that the direction of actuation of the control elements corresponds to the direction of movement of the vehicle in any rotational position of the seat.

## Revendications

1. Engin routier automoteur comportant
- un poste de manoeuvre placé sur un châssis (4),
- un dispositif d'entraînement,
- un dispositif de direction,
- un siège de conducteur (5) qui est placé de façon à pouvoir tourner dans le poste de manoeuvre et dans lequel est intégré une unité de commande (6) qui est destinée à commander le roulement et qui génère des signaux de commande du dispositif d'entraînement et du dispositif de direction en fonction du sens de déplacement de réglage, des éléments de commande de l'unité de commande (6),
**caractérisé en ce que** l'engin routier comporte un dispositif de détection de l'angle de rotation instantané µ entre la position du siège de conducteur (5) et l'axe longitudinal du châssis (4) et de correction de la composante directionnelle des signaux de réglage des éléments de commande d'un angle µ de sorte que le sens de déplacement de réglage des éléments de commande coïncide, dans chaque position du siège de conducteur (5), avec le sens de déplacement déclenché de l'engin.

2. Engin routier selon la revendication 1, **caractérisé en ce que** le dispositif de détection de l'angle de rotation instantané µ entre la position du siège de conducteur (5) et l'axe longitudinal du châssis (4) transmet l'angle de rotation µ aux éléments de commande de l'unité de commande (6) par des moyens mécaniques, électromécaniques, optiques ou électriques.

3. Engin routier selon la revendication 1 ou 2, **caractérisé en ce que** les signaux de réglage du sens de roulement et de la direction peuvent être corrigés en continu dans l'unité de commande (6) en fonction de l'angle de rotation instantané µ entre la position du siège de conducteur (5) et l'axe longitudinal du châssis (4).

4. Engin routier selon l'une des revendications 1 à 3, **caractérisé en ce que** l'unité de commande (6) comporte comme élément de commande un seul levier de commande (8) pour sélectionner le sens de roulement, la vitesse de roulement et la direction.

5. Engin routier selon la revendication 4, **caractérisé en ce que** le levier de commande (8) est monté dans un joint de cardan (28) et **en ce que** le joint de cardan (28) repose sur une roue pivotante (26) qui peut être entraînée en rotation d'un angle de rotation -µ lorsque la position du siège de conducteur (5) fait un angle de rotation µ par rapport à l'axe longitudinal du châssis.

6. Engin routier selon l'une des revendications 1 à 5, **caractérisé en ce que** l'engin comporte deux essieux orientables et **en ce que** le dispositif de direction peut être commuté au niveau de l'unité de commande (6) sur l'un des deux essieux ou sur les deux essieux.

7. Engin routier selon les revendications 4 à 6, **caractérisé en ce que** le levier de commande (8) est guidé dans deux coulisses (24) orthogonales l'une à l'autre.

8. Engin routier selon l'une des revendications 1 à 7, **caractérisé en ce que** l'engin routier est un rouleau compresseur (1).

9. Procédé permettant de faire rouler et de diriger un engin routier qui comporte un siège de conducteur (5) placé de façon à pouvoir tourner dans un poste de manoeuvre et d'une unité de commande (6) qui est intégrée dans le siège de conducteur (5) et qui est destinée à commander le roulement au moyen d'éléments de commande,
**caractérisé en ce que**
- l'on détecte l'angle de rotation instantané µ entre la position du siège de conducteur (5) et l'axe longitudinal du châssis (4) et l'on corrige en continu la composante directionnelle des signaux de commande des éléments de commande d'un angle -µ, et **en ce que**
- le sens de déplacement de réglage des éléments de commande coïncide dans chaque position de rotation du siège au sens de déplacement de l'engin.
